(19) **Europäisches Patentamt / European Patent Office / Office européen des brevets**

(11) **EP 4 607 352 A1**

(12) **EUROPEAN PATENT APPLICATION**

(43) Date of publication:
27.08.2025 Bulletin 2025/35

(21) Application number: 24218028.9

(22) Date of filing: 06.12.2024

(51) International Patent Classification (IPC):
G06F 9/50 (2006.01)     G06F 11/30 (2006.01)
G06F 11/34 (2006.01)     G06N 3/045 (2023.01)
G06N 3/0464 (2023.01)    G06N 3/08 (2023.01)

(52) Cooperative Patent Classification (CPC):
G06F 9/505; G06F 11/3006; G06F 11/3055;
G06F 11/3442; G06F 11/3447; G06N 3/04;
G06N 3/045; G06N 3/0464; G06N 3/08; Y02D 10/00

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 21.02.2024 CN 202410195025

(71) Applicants:
• Alipay (Hangzhou) Information Technology Co., Ltd.
  Hangzhou, Zhejiang 310000 (CN)
• Shanghai Jiao Tong University
  Shanghai 200240 (CN)

(72) Inventors:
• LUO, Yang
  Hangzhou, Zhejiang Province, 310000 (CN)

• GAO, Mohan
  Hangzhou, Zhejiang Province, 310000 (CN)
• YU, Zhemeng
  Hangzhou, Zhejiang Province, 310000 (CN)
• GE, Haoyuan
  Hangzhou, Zhejiang Province, 310000 (CN)
• GAO, Xiaofeng
  Shanghai (CN)
• CAI, Tengwei
  Hangzhou, Zhejiang Province, 310000 (CN)
• CHEN, Guihai
  Shanghai (CN)

(74) Representative: Winter, Brandl - Partnerschaft mbB
Alois-Steinecker-Straße 22
85354 Freising (DE)

(54) **WORKLOAD PREDICTION METHODS AND APPARATUSES FOR SERVICE IN SERVICE CLUSTER**

(57) Embodiments of this specification provide a workload prediction method and apparatus for a service in a service cluster. The method includes: obtaining n+1 indicator sequences respectively corresponding to services in a same historical time period, which include n status indicator sequences corresponding to n system status indicators and a load indicator sequence corresponding to a workload indicator; calculating a correlation coefficient of a same indicator between different services based on the n+1 indicator sequences corresponding to the services, and constructing a similarity graph corresponding to the same indicator, to obtain n+1 similarity graphs; processing the n+1 similarity graphs by using an attention mechanism, to obtain an aggregated similarity graph; performing, by using a first convolutional network, graph convolutional processing on an initial representation of each service in the aggregated similarity graph, to obtain an aggregated representation corresponding to each service; and performing workload prediction based on the aggregated representation.

FIG. 2

## Description

## TECHNICAL FIELD

One or more embodiments of this specification relate to the computer field, and in particular, to workload prediction methods and apparatuses for a service in a service cluster.

## BACKGROUND

With maturity of technologies such as cloud, big data, and containers, a serverless architecture is widely used. The serverless architecture is a new type of Internet architecture, which promotes the development of cloud computing and provides back-end services on demand. Providers without server architectures allow users to compile and deploy code without worrying about an increase in the data scale of an underlying infrastructure. With explosive growth of cloud computing resource demands, providing on-demand services in large-scale scenarios is becoming increasingly challenging.

In a typical application scenario with a serverless architecture, multiple services form one service cluster, one service generally corresponds to one specified computing task and performs the computing task depending on computing resources allocated to the service, the multiple services share computing resources, and according to a workload of any service, resources are dynamically allocated to the service. By allocating resources on demand, resource configuration can be optimized, resource utilization and user service experience can be greatly improved, resource waste and energy consumption can be reduced, and the goal of high efficiency, green environmental protection, and low carbon can be achieved. Predicting a workload of a service in a service cluster is a prerequisite for dynamic resource allocation.

In the existing technology, a workload of a service is generally predicted according to historical load information of the service. Accuracy cannot satisfy a requirement, and prediction accuracy needs to be improved. The above-mentioned historical load information may belong to privacy data.

## SUMMARY

One or more embodiments of this specification describe a workload prediction method and apparatus for a service in a service cluster, which can improve prediction accuracy.

According to a first aspect, a workload prediction method for a service in a service cluster is provided, including:

obtaining n+1 indicator sequences respectively corresponding to services in the service cluster in a same historical time period, which include n status indicator sequences corresponding to n system status indicators and a load indicator sequence corresponding to a workload indicator;

calculating a correlation coefficient of a same indicator between different services based on the n+1 indicator sequences corresponding to the services, and constructing a similarity graph corresponding to the same indicator based on the correlation coefficient, to obtain n+1 similarity graphs, where a node in the similarity graph represents a service, and a connection edge between nodes corresponds to a correlation coefficient;

processing the n+1 similarity graphs by using an attention mechanism through an attention network, to obtain an aggregated similarity graph;

performing, by using a first convolutional network, graph convolutional processing on an initial representation of each service in the aggregated similarity graph, to obtain an aggregated representation corresponding to each service, where an initial representation of any service is determined based on a load indicator sequence of the service; and

obtaining, based on the aggregated representation corresponding to each service, a first prediction value of a workload indicator corresponding to each service at a target moment after the historical time period.

In a possible implementation, the n system status indicators include at least one of the following: response time of a service, CPU utilization, and a number of computing resources owned by a service.

In a possible implementation, the workload indicator includes:

a number of visits or a number of CPU cores used.

In a possible implementation, the attention network includes multiple attention layers and mapping layers; and processing the n+1 similarity graphs by using the attention mechanism through the attention network, to obtain the aggregated similarity graph includes:

obtaining, at any attention layer, a current representation input thereto of each service node in each similarity graph, and performing first processing on the current representation by using an attention mechanism in a same similarity graph, to obtain a first update representation of each service node; performing second processing on the current representation by using an attention mechanism between different similarity graphs, to obtain a second update representation of each service node; and aggregating the first update representation and the second update representation as an output representation of the any attention layer; and

mapping, at the mapping layer, an output representation, output at a last attention layer, of each service node in each similarity graph into a target matrix, to obtain an adjacency matrix of the aggregated similarity graph by using the target matrix.

Further, a current representation, input into and obtained by a first attention layer, of each service node in each similarity graph is a first representation, and the first representation is determined in the following manner:

determining, based on a correlation coefficient between any service node and another service node in a similarity graph corresponding to a workload indicator, a basic node representation corresponding to the service node;
encoding an element in any similarity graph to determine a graph representation corresponding to the similarity graph; and
separately aggregating a basic node representation of any service node and a graph representation corresponding to each similarity graph to obtain a first representation of the service node in each similarity graph.

Further, the first processing includes:

for a first service node in a first similarity graph, determining a first attention score between the first service node and any service node according to a first representation and a current representation of the first service node in the first similarity graph and a first representation and a current representation of the any service node in the first similarity graph; and
performing weighted processing on the current representation of the any service node by using the first attention score, to obtain a first update representation of the first service node in the first similarity graph.

Further, the second processing includes:

for a first service node in a first similarity graph, determining, according to a first representation and a current representation of the first service node in the first similarity graph and a first representation and a current representation of the first service node in any similarity graph, that the first service node is corresponding to a second attention score between the first similarity graph and the any similarity graph; and
performing weighted processing on the current representation of the first service node in the any similarity graph by using the second attention score, to obtain a second update representation of the first service node in the first similarity graph.

Further, determining the basic node representation corresponding to the service node includes:

retaining, according to the correlation coefficient in the similarity graph corresponding to the workload indicator, a connection edge whose correlation coefficient is greater than a predetermined threshold in the similarity graph, and deleting other connection edges to obtain an updated similarity graph; and
in the updated similarity graph, using a random walk manner to combine correlation coefficients of connection edges any service node passes through, as a basic node representation corresponding to the service node.

In a possible implementation, obtaining, based on the aggregated representation corresponding to each service, the first prediction value of the workload indicator corresponding to each service at the target moment after the historical time period includes:

inputting the n+1 indicator sequences respectively corresponding to the services into a linear neural network, to obtain a system status representation corresponding to each service;
aggregating the system status representation corresponding to each service with the aggregated representation corresponding to each service, to obtain a comprehensive representation corresponding to each service; and
obtaining, based on the comprehensive representation corresponding to each service, the first prediction value of the workload indicator corresponding to each service at the target moment after the historical time period.

Further, obtaining, based on the comprehensive representation corresponding to each service, the first prediction value of the workload indicator corresponding to each service at the target moment after the historical time period includes:

performing frequency domain analysis for the comprehensive representation corresponding to each service, to obtain the first k periodic components respectively corresponding to the services and sorted in order of significance;
folding the comprehensive representation corresponding to each service according to any periodic component, and performing two-dimensional convolution to obtain a periodic representation corresponding to each service;
aggregating periodic representations respectively corresponding to k periodic components of a same service to obtain a pattern representation of the service;
performing time convolutional processing on a pattern representation corresponding to each service by using a second convolutional network, to obtain an aggregated pattern representation corresponding to each service; and
obtaining, based on the aggregated pattern representation corresponding to each service, the first prediction value of the workload indicator corresponding to each service at the target moment after the historical time period.

Further, each service is a sample service having a label value of the workload indicator at the target time; and

the method further includes:
performing, by using the first convolutional network, graph convolutional processing on an initial representation of each service in a similarity graph corresponding to a workload indicator, and performing, by using the second convolutional network, time convolutional processing on a result of graph convolutional processing, to obtain a contrastive pattern representation corresponding to each service;
calculating a first similarity score between an aggregation pattern representation corresponding to a same service and a contrastive pattern representation, calculating a second similarity score between aggregation pattern representations corresponding to different services and the contrastive pattern representation, and determining a first prediction loss according to the first similarity score and the second similarity score, where the first prediction loss is positively correlated with the second similarity score and negatively correlated with the first similarity score; and
adjusting at least a part of parameters of a prediction model with a training obj ective of minimizing a total prediction loss, where the total prediction loss includes the first prediction loss and a second prediction loss determined according to the label value, and the prediction model includes the attention network, the first convolutional network, the linear neural network, and the second convolutional network.

Further, the second prediction loss is determined in the following manner:
determining the second prediction loss according to a difference between a first prediction value and a label value corresponding to each service.

Further, the total prediction loss further includes a third prediction loss; and

the third prediction loss is determined in the following manner:
obtaining, based on the contrastive pattern representation corresponding to each service, a second prediction value of the workload indicator corresponding to each service at the target moment; and
determining the third prediction loss according to a difference between the second prediction value and the label value corresponding to each service.

According to a second aspect, a workload prediction apparatus for a service in a service cluster is provided, including:

an acquisition unit, configured to obtain n+1 indicator sequences respectively corresponding to services in the service cluster in a same historical time period, which include n status indicator sequences corresponding to n system status indicators and a load indicator sequence corresponding to a workload indicator;
a construction unit, configured to: calculate a correlation coefficient of a same indicator between different services based on the n+1 indicator sequences corresponding to the services as obtained by the acquisition unit, and construct a similarity graph corresponding to the same indicator based on the correlation coefficient, to obtain n+1 similarity graphs, where a node in the similarity graph represents a service, and a connection edge between nodes corresponds to a correlation coefficient;
an aggregation unit, configured to process the n+1 similarity graphs, obtained by the construction unit, by using an attention mechanism through an attention network, to obtain an aggregated similarity graph;
a processing unit, configured to perform, by using a first convolutional network, graph convolutional processing on an initial representation of each service in the aggregated similarity graph obtained by the aggregation unit, to obtain an aggregated representation corresponding to each service, where an initial representation of any service is determined based on a load indicator sequence of the service; and
a prediction unit, configured to obtain, based on the aggregated representation corresponding to each service as obtained by the processing unit, a first prediction value of a workload indicator corresponding to each service at a target moment after the historical time period.

According to a third aspect, a computer-readable storage medium that stores a computer program is provided, and when the computer program is executed on a computer, the computer is caused to perform the method of the first aspect.
According to a fourth aspect, a computing device is provided, including a memory and a processor, where the memory stores executable code, and when executing the executable code, the processor implements the method according to the first aspect.
According to the method and the apparatus provided in the embodiments of this specification, first, n+1 indicator sequences corresponding to services in the service cluster in the same historical time period are obtained, and include n status indicator sequences corresponding to n system status indicators and a load indicator sequence corresponding to a workload indicator. Then, a correlation coefficient of the same indicator between different services is calculated based on the n+1 indicator sequences corresponding to the services, and a similarity graph corresponding to the same indicator is constructed based on the correlation coefficient, so as to obtain n+1 similarity graphs, where a node in the similarity graph represents a service, and a connection edge between nodes corresponds to a correlation coefficient. Then, the n+1 similarity graphs are processed by using an attention mechanism through an attention network to obtain an aggregated similarity graph. Then, graph convolutional processing is performed on an initial representation of each service in the aggregated similarity graph by using a first convolutional network, to obtain an aggregated representation corresponding to each service, where an initial representation of any service is determined based on a load indicator sequence of the service. Finally, based on the aggregated representation corresponding to each service, a first prediction value of a workload indicator corresponding to each service at a target moment after the historical time period is obtained. It can be understood from the above-mentioned description that, in the embodiments of this specification, a similarity in a system status indicator and a workload indicator of a service is comprehensively considered, so as to facilitate more comprehensive capturing of a connection between services. Based on multiple obtained similarity graphs corresponding to different indicators, an aggregated similarity graph is obtained by using an attention mechanism to aggregate a similarity in different indicators of a service. Based on a load indicator sequence of any service, an initial representation of the service is determined. An aggregated representation after the service similarity is captured is obtained by performing graph convolutional processing on the obtained aggregated similarity graph, and workload prediction of each service is performed based on the aggregated representation corresponding to each service, thereby improving accuracy of workload prediction.

## BRIEF DESCRIPTION OF DRAWINGS

To describe the technical solutions in the embodiments of this specification more clearly, the following briefly describes the accompanying drawings needed for describing the embodiments. Clearly, the accompanying drawings in the following descriptions show merely some embodiments of this specification, and a person of ordinary skill in the art can still derive other drawings from these accompanying drawings without creative efforts.

FIG. 1 is a schematic diagram illustrating an implementation scenario, according to an embodiment of this specification;
FIG. 2 is a flowchart illustrating a workload prediction method for a service in a service cluster, according to an embodiment.
FIG. 3 is a schematic diagram illustrating a relationship between an indicator sequence and a similarity graph, according to an embodiment;

FIG. 4 is a schematic diagram illustrating a determining manner of a first representation of a node, according to an embodiment;
FIG. 5 is a schematic diagram illustrating a determining manner of an aggregated representation of a node, according to an embodiment;
FIG. 6 is a schematic diagram illustrating a determining manner of a comprehensive representation of a node, according to an embodiment;
FIG. 7 is a schematic diagram illustrating a determining manner of an aggregation pattern representation of a node, according to an embodiment;
FIG. 8 is a schematic diagram illustrating a model training manner, according to an embodiment; and
FIG. 9 is a schematic block diagram illustrating a workload prediction apparatus for a service in a service cluster, according to an embodiment.

## DESCRIPTION OF EMBODIMENTS

The solutions provided in this specification are described below with reference to the accompanying drawings.

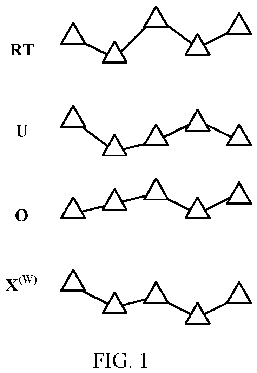

FIG. 1 is a schematic diagram illustrating an implementation scenario, according to an embodiment of this specification. The implementation scenario relates to workload prediction for a service in a service cluster. It can be understood that the service cluster includes multiple services, and generally, based on a historical workload of only one service, a future workload of the service is predicted, and prediction accuracy is low. In this embodiment of this specification, a relationship between services is considered, and under conditions of historical workloads and historical system statuses respectively corresponding to multiple services, a future workload is predicted according to historical usage conditions, so prediction accuracy of a workload of a service can be improved, and correspondingly, accuracy of dynamically allocating resources to the service can be improved.

In this embodiment of this specification, there can be a similarity between functions of multiple services included in a service cluster, resulting in hidden connections between workloads of multiple services, that is, a similarity between workloads of different services. The above-mentioned service can be specifically an online inference service. The online inference service is used to train and infer an AI model for an online computation request sent by a service party. Considering a similarity of workloads can improve accuracy of workload prediction.

A workload of a service can be represented by an indicator value of a workload indicator, which is used to represent a computing resource needed to provide the service. The workload indicator includes a number of visits, a number of CPU cores used, etc.

A system status of a service can be represented by an indicator value of a system status indicator, which is used to indicate a resource status of a system during service computing. The system status indicator includes response time of a service, CPU utilization, a number of computing resources owned by a service, etc.

Referring to FIG. 1, FIG. 1 shows four indicator sequences of one service, including three status indicator sequences corresponding to three system status indicators and a load indicator sequence corresponding to a workload indicator. RT (Response Time) represents response time of a service, U (CPU Utilization) represents CPU utilization, O (Number of PODs) represents a number of computing resources owned by a service, and RT, U, and O are system status indicators. $X^{(W)}$ is a workload indicator. RT, U, O, and $X^{(W)}$ are corresponding to respective indicator sequences. An indicator sequence of a system status indicator can be referred to as a status indicator sequence, and an indicator sequence of a workload indicator can be referred to as a load indicator sequence. Each service has a group of indicator sequences corresponding to RT, U, O, and $X^{(W)}$, which are aligned in a time dimension. FIG. 1 is used as an example. A horizontal direction represents time, a vertical direction represents indicator value, and a triangle symbol is used to identify an indicator value at a moment.

In the embodiment of this specification, a similarity in a system status indicator and a workload indicator of a service is comprehensively considered, so as to facilitate more comprehensive capturing of a connection between services, thereby improving accuracy of workload prediction.

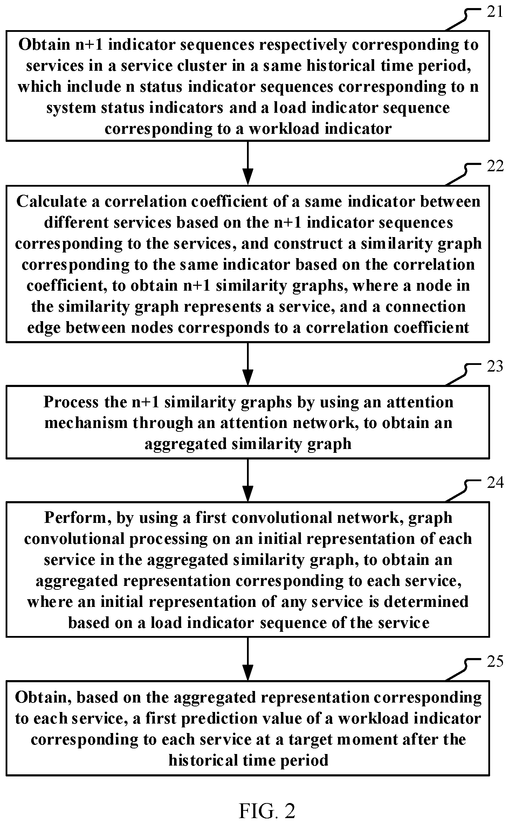

FIG. 2 is a flowchart illustrating a workload prediction method for a service in a service cluster, according to an embodiment. The method can be based on the implementation scenario shown in FIG. 1. As shown in FIG. 2, the workload prediction method for a service in a service cluster in this embodiment includes the following steps: Step 21: Obtain n+1 indicator sequences respectively corresponding to services in the service cluster in a same historical time period, which include n status indicator sequences corresponding to n system status indicators and a load indicator sequence corresponding to a workload indicator. Step 22: Calculate a correlation coefficient of a same indicator between different services based on the n+1 indicator sequences corresponding to the services, and construct a similarity graph corresponding to the same indicator based on the correlation coefficient, to obtain n+1 similarity graphs, where a node in the similarity graph represents a service, and a connection edge between nodes corresponds to a correlation coefficient. Step 23: Process the n+1 similarity graphs by using an attention mechanism through an attention network, to obtain an aggregated similarity graph. Step 24: Perform, by using a first convolutional network, graph convolutional processing on an initial representation of each service in the aggregated similarity graph, to obtain an aggregated representation corresponding to each service, where an initial representation of any service is determined based on a load indicator sequence of the service. Step 25: Obtain, based on the aggregated representation corresponding to each service, a first prediction value of a workload indicator corresponding to each service at a target moment after the historical time period. The following describes specific execution manners of the above steps.

First, in step 21, n+1 indicator sequences respectively corresponding to services in the service cluster in a same historical time period are obtained, which include n status indicator sequences corresponding to n system status indicators and a load indicator sequence corresponding to a workload indicator. It can be understood that if there are M services in a service cluster, and one service corresponds to n+1 indicator sequences, M(n+1) indicator sequences are obtained in total.

In an example, the n system status indicators include at least one of the following:
response time of a service, CPU utilization, and a number of computing resources owned by a service.

In an example, the workload indicator includes:
a number of visits or a number of CPU cores used.

FIG. 1 is used as an example. RT, U, and O are respectively corresponding to one status indicator sequence, and $X^{(W)}$ is corresponding to a load indicator sequence.

Then, in step 22, a correlation coefficient of a same indicator between different services is calculated based on the n+1 indicator sequences corresponding to the services, and a similarity graph corresponding to the same indicator is constructed based on the correlation coefficient, to obtain n+1 similarity graphs, where a node in the similarity graph represents a service, and a connection edge between nodes corresponds to a correlation coefficient. It can be understood that the number of similarity graphs is the same as the number of indicators, that is, n+1 similarity graphs are constructed, and the number of nodes included in each similarity graph is the same as the number of services. If there are M services in a service cluster, each similarity graph includes M nodes.

In this embodiment of this specification, the above-mentioned correlation coefficient can be understood as an edge weight, and each similarity graph has the same node and a different edge weight.

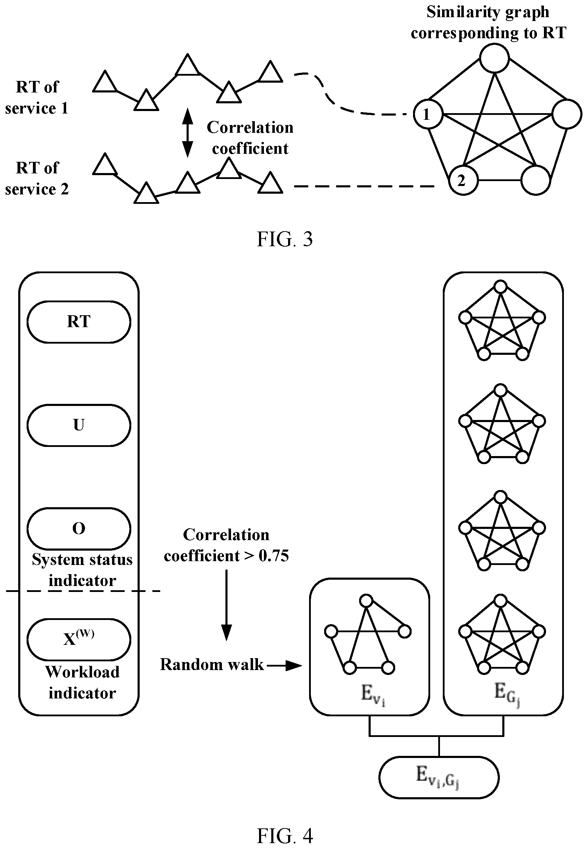

FIG. 3 is a schematic diagram illustrating a relationship between an indicator sequence and a similarity graph, according to an embodiment. Referring to FIG. 3, in a similarity graph corresponding to a system status indicator RT, five nodes are included, and each node represents one service. Node 1 represents service 1, and node 2 represents service 2. An RT indicator sequence of service 1 and an RT indicator sequence of service 2 can be obtained. According to the above-mentioned two RT indicator sequences, a Pearson correlation coefficient corresponding to the RT indicator is calculated between service 1 and service 2, and the correlation coefficient is used as an edge weight of a connection edge between node 1 and node 2. In this embodiment of this specification, an edge weight of a connection edge between any two other nodes can be determined in a similar manner, so as to obtain a similarity graph corresponding to an RT indicator.

Similarly, a similarity graph corresponding to a U indicator can be constructed according to a U indicator sequence corresponding to each service; a similarity graph corresponding to an O indicator according to an O indicator sequence corresponding to each service can be constructed; and a similarity graph corresponding to an $X^{(W)}$ indicator according to an $X^{(W)}$ indicator sequence corresponding to each service can be constructed.

Next, in step 23, the n+1 similarity graphs are processed by using an attention mechanism through an attention network, to obtain an aggregated similarity graph. It can be understood that different similarity graphs in the n+1 similarity graphs correspond to different indicators, and processing the n+1 similarity graphs by using the attention mechanism can aggregate a similarity in different indicators of a service, so as to obtain an aggregated similarity graph. This process can be referred to as similarity modeling.

In an example, the attention network includes multiple attention layers and mapping layers; and processing the n+1 similarity graphs by using the attention mechanism through the attention network, to obtain the aggregated similarity graph includes:

> obtaining, at any attention layer, a current representation input thereto of each service node in each similarity graph, and performing first processing on the current representation by using an attention mechanism in a same similarity graph, to obtain a first update representation of each service node; performing second processing on the current representation by using an attention mechanism between different similarity graphs, to obtain a second update representation of each service node; and aggregating the first update representation and the second update representation as an output representation of the any attention layer; and
> mapping, at the mapping layer, an output representation, output at a last attention layer, of each service node in each similarity graph into a target matrix, to obtain an adjacency matrix of the aggregated similarity graph by using the target matrix.

In this example, the attention mechanism is simultaneously run within each similarity graph and between different similarity graphs to aggregate a similarity on different indicators of a service to obtain an aggregated similarity graph.

For example, the 1st attention layer is denoted as $S^{(l)}$, a current representation, input into the attention layer, of a node i in a similarity graph j is $S^{(l)}_{v_i,G_j}$, a first update representation of the node i that is obtained through processing in the similarity graph j is

$WS^{(l)}_{v_i,G_j}$, a second update representation of the node i that is obtained through processing in the similarity graph j is $AS^{(l)}_{v_i,G_j}$, $WS^{(l)}_{v_i,G_j}$ and $AS^{(l)}_{v_i,G_j}$ are aggregated by using a gating aggregation mechanism to obtain an output representation of the $S^{(l)}$ layer, the output representation of this layer is used as an input to the (l+1)th attention layer, and the (l+1)th attention layer is denoted as $S^{(l+1)}$. Based on an output of the last attention layer, an adjacency matrix $W^{(S)}$ of the aggregated similarity graph is obtained by using the mapping layer.

Further, a current representation, input into and obtained by a first attention layer, of each service node in each similarity graph is a first representation, and the first representation is determined in the following manner:

> determining, based on a correlation coefficient between any service node and another service node in a similarity graph corresponding to a workload indicator, a basic node representation corresponding to the service node;
> encoding an element in any similarity graph to determine a graph representation corresponding to the similarity graph; and
> separately aggregating a basic node representation of any service node and a graph representation corresponding to each similarity graph to obtain a first representation of the service node in each similarity graph.

In this example, the above-mentioned basic node representation and graph representation can be aggregated in a concatenation manner to obtain the first representation. It can be understood that nodes representing the same service have different first representations in different similarity graphs.

Further, determining the basic node representation corresponding to the service node includes:

> retaining, according to the correlation coefficient in the similarity graph corresponding to the workload indicator, a connection edge whose correlation coefficient is greater than a predetermined threshold in the similarity graph, and deleting other connection edges to obtain an updated similarity graph; and
> in the updated similarity graph, using a random walk manner to combine correlation coefficients of connection edges any service node passes through, as a basic node representation corresponding to the service node.

In this example, the above-mentioned predetermined threshold can be set according to needs, for example, the above-mentioned predetermined threshold is set to 0.75, so only a part of connection edges are reserved in the updated similarity graph.

FIG. 4 is a schematic diagram illustrating a determining manner of a first representation of a node, according to an embodiment. Referring to FIG. 4, first 4 indicator sequences are obtained, and from top to bottom, are an RT indicator sequence, a U indicator sequence, an O indicator sequence, and an $X^{(W)}$ indicator sequence respectively corresponding to services. RT, U, and O are corresponding to system status indicators, and $X^{(W)}$ is corresponding to a workload indicator. Then, a correlation coefficient of each service corresponding to the same indicator is calculated according to each indicator sequence, and a similarity graph corresponding to the same indicator is constructed based on the correlation coefficient. Because there are 4 indicators in total, 4 similarity graphs are constructed. Then, according to a correlation coefficient in a similarity graph corresponding to a workload indicator, a connection edge whose correlation coefficient is greater than 0.75 in the similarity graph is retained, and other connection edges are deleted, so as to obtain an updated similarity graph. In the updated similarity graph, using a random walk manner to combine correlation coefficients of connection edges any service node passes through, as a basic node representation $E_{v_i}$ corresponding to the service node. An element in any similarity graph is encoded to determine a graph representation $E_{G_j}$ corresponding to the similarity graph. A basic node representation $E_{v_i}$ of any service node and a graph representation $E_{G_j}$ corresponding to each similarity graph are separately aggregated to obtain a first representation $E_{v_i,G_j}$ of the service node in each similarity graph. It can be understood that, i represents a node number, and j represents a graph number.

Further, the first processing includes:

for a first service node in a first similarity graph, determining a first attention score between the first service node and any service node according to a first representation and a current representation of the first service node in the first similarity graph and a first representation and a current representation of the any service node in the first similarity graph; and performing weighted processing on the current representation of the any service node by using the first attention score, to obtain a first update representation of the first service node in the first similarity graph.

In this example, the attention mechanism is used within the same similarity graph to update a representation of a node within the similarity graph.

For example, the lst attention layer is denoted as $S^{(l)}$, a current representation, input into the attention layer, of a node i in a similarity graph j is $S^{(l)}_{v_i,G_j}$, a first update representation of the node i that is obtained through processing in the similarity graph j is

$$WS^{(l)}_{v_i,G_j}, \quad \text{where} \quad WS^{(l)}_{v_i,G_j} =$$

$$\sum_{v_j \in V_i} \alpha_{v_i,v_j}(S^{(l)}_{v_j,G_i})$$ . It can be understood that, $G_i$ represents a similarity graph I, $V_i$ represents each node in the similarity graph i, $\alpha_{v_i,v_j}$ represents a first attention score between the node i and a node j, $S^{(l)}_{v_j,G_i}$ represents a current representation of the node j in the similarity graph i, and $\alpha_{v_i,v_j}$ is determined according to similarity between a concatenation representation obtained by concatenating $S^{(l)}_{v_i,G_i}$ and $E_{v_i,G_i}$ and a concatenation representation obtained by concatenating $S^{(l)}_{v_j,G_i}$ and $E_{v_j,G_i}$.

Further, the second processing includes:

for a first service node in a first similarity graph, determining, according to a first representation and a current representation of the first service node in the first similarity graph and a first representation and a current representation of the first service node in any similarity graph, that the first service node is corresponding to a second attention score between the first similarity graph and the any similarity graph; and performing weighted processing on the current representation of the first service node in the any similarity graph by using the second attention score, to obtain a second update representation of the first service node in the first similarity graph.

For example, the lst attention layer is denoted as $S^{(l)}$, a current representation, input into the attention layer, of a node i in a similarity graph j is $S^{(l)}_{v_i,G_j}$, a second update representation of the node i that is obtained through processing in the similarity graph j is

$$AS^{(l)}_{v_i,G_j}, \quad \text{where} \quad AS^{(l)}_{v_i,G_j} =$$

$$\sum_{c=1}^{|G|} \beta_{G_j,G_c}(S^{(l)}_{v_i,G_c})$$ . It can be understood that, c represents a graph number, $G_c$ represents a similarity graph c, |G| represents the number of similarity graphs, $\beta_{G_j,G_c}$ represents a second attention score between the graph j and the graph c, $S^{(l)}_{v_i,G_c}$ represents a current representation of the node i in the similarity graph c, and $\beta_{G_j,G_c}$ is determined according to similarity between a concatenation representation obtained by concatenating $S^{(l)}_{v_i,G_j}$ and $E_{v_i,G_j}$ and a concatenation representation obtained by concatenating $S^{(l)}_{v_i,G_c}$ and $E_{v_i,G_c}$.

Then, in step 24, graph convolutional processing is performed on an initial representation of each service in the aggregated similarity graph by using a first convolutional network, to obtain an aggregated representation corresponding to each service, where an initial representation of any service is determined based on a load indicator sequence of the service. It can be understood that the aggregated representation is a representation obtained after service similarity is captured.

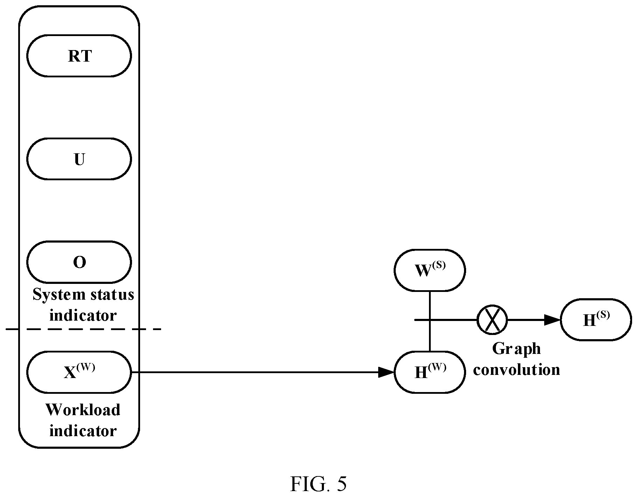

FIG. 5 is a schematic diagram illustrating a determining manner of an aggregated representation of a node, according to an embodiment. Referring to FIG. 5, an initial representation $H^{(W)}$ of each service can be determined according to a load indicator sequence $X^{(W)}$ corresponding to each service, and graph convolutional processing is performed on $H^{(W)}$ and an adjacency matrix $W^{(S)}$ of an aggregated similarity graph to obtain an aggregated representation $H^{(S)}$ corresponding to each service. It can be understood that the initial representation $H^{(W)}$ of each service is independent of a status indicator sequence.

Finally, in step 25, a first prediction value of a workload indicator corresponding to each service at a target moment after the historical time period is obtained based on the aggregated representation corresponding to each service. It can be understood that, because the aggregated representation is a representation obtained after service similarity is captured, workload prediction based on the aggregated representation can improve prediction accuracy.

In an example, obtaining, based on the aggregated representation corresponding to each service, the first prediction value of the workload indicator corresponding to each service at the target moment after the historical time period includes:

inputting the n+1 indicator sequences respectively corresponding to the services into a linear neural network, to obtain a system status representation corresponding to each service;

aggregating the system status representation corresponding to each service with the aggregated representation corresponding to each service, to obtain a comprehensive representation corresponding to each service; and

obtaining, based on the comprehensive representation corresponding to each service, the first prediction value of the workload indicator corresponding to each service at the target moment after the historical time period.

In this example, in consideration that the workload of the service is closely related to the system status, a change of the system status directly affects the workload of the service because the system has computing resources that can be dynamically allocated and can be adjusted according to needs of the workload. For example, when the system status indicates a higher load, the response time of the service may become longer, affecting the workload. At the time of predicting a workload of a service, a relationship between a system status and a workload is comprehensively considered to obtain a comprehensive representation corresponding to each service, and workload prediction is performed based on the comprehensive representation, thereby further improving prediction accuracy. This process can be referred to as system status modeling.

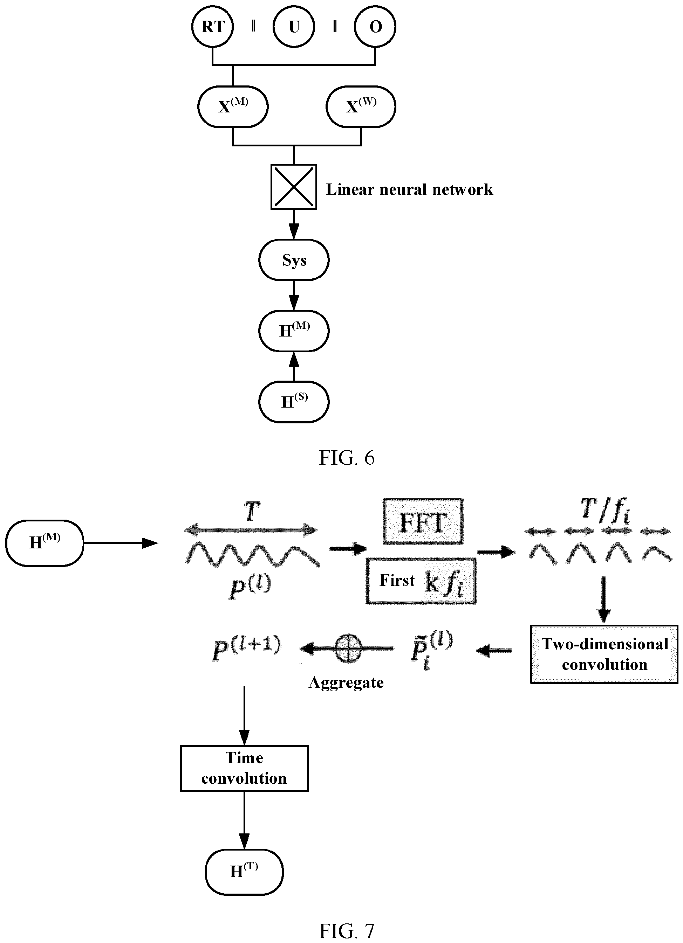

FIG. 6 is a schematic diagram illustrating a determining manner of a comprehensive representation of a node, according to an embodiment. Referring to FIG. 6, because a system status of a service is closely related to a workload, during workload prediction, in this embodiment of this specification, impact of the system status on the workload is considered, a system status representation is introduced, three status indicator sequences RT, U, and O of each service and a load indicator sequence $X^{(W)}$ are combined and input into a linear neural network (Dense) to obtain a system status representation *Sys* corresponding to each service, and *Sys* and an aggregated representation $H^{(S)}$ corresponding to each service are aggregated to obtain a comprehensive representation $H^{(M)}$ corresponding to each service.

Further, obtaining, based on the comprehensive representation corresponding to each service, the first prediction value of the workload indicator corresponding to each service at the target moment after the historical time period includes:

performing frequency domain analysis for the comprehensive representation corresponding to each service, to obtain the first k periodic components respectively corresponding to the services and sorted in order of significance;

folding the comprehensive representation corresponding to each service according to any periodic component, and performing two-dimensional convolution to obtain a periodic representation corresponding to each service;

aggregating periodic representations respectively corresponding to k periodic components of a same service to obtain a pattern representation of the service;

performing time convolutional processing on a pattern representation corresponding to each service by using a second convolutional network, to obtain an aggregated pattern representation corresponding to each service; and

obtaining, based on the aggregated pattern representation corresponding to each service, the first prediction value of the workload indicator corresponding to each service at the target moment after the historical time period.

In this example, a workload pattern for a service is highly dynamic. For example, a workload pattern for a service is migrated to a different degree with service online deployment, service adjustment, or a resource configuration change, so the workload pattern is highly dynamic. To analyze a dynamic time pattern of a workload for a service, a dynamic periodic component in the workload can be captured by converting a load indicator sequence from a time domain to a frequency domain. The load indicator sequence is converted into a group of spectrum components, where each component represents a vibration pattern at a different frequency. By analyzing a frequency and amplitude intensity, it is possible to understand a main periodic component of the workload, and to identify a common periodic pattern in the workload, such as daily, weekly, or monthly change trends. In order to better learn a periodic feature in a workload sequence, a load indicator sequence is further rearranged, and a convolutional operation is performed thereon. By rearranging the load indicator sequence, adjacent periodic features can be more continuous, and an association therebetween can be better captured. A convolution operation can then be applied to learn a periodic pattern in the sequence, further improving accuracy of workload prediction. This process can be referred to as dynamic time pattern modeling.

FIG. 7 is a schematic diagram illustrating a determining manner of an aggregation pattern representation of a node, according to an embodiment. Referring to FIG. 7, after a comprehensive representation $H^{(S)}$ aggregating service similarity and system status impact is obtained, the most significant k periodic components $f_i$ in the comprehensive representation $H^{(S)}$ are captured for a time sequence $P^{(l)}$ corresponding to $H^{(S)}$ in a Fourier transform manner, and two-dimensional convolution (Inception) is performed on the time sequence $P^{(l)}$ after the time sequence is folded according to the periodic component $f_i$, so as to obtain a representation $\tilde{p}_i^{(l)}$. A representation $\tilde{p}_i^{(l)}$ learned from k different periodic components are aggregated to obtain a pattern representation $P^{(l+1)}$, and time convolutional processing is performed on $P^{(l+1)}$ to obtain an aggregated pattern representation $H^{(T)}$ that simultaneously captures service similarity and system status impact, and extracts a service dynamic time pattern.

Further, each service is a sample service having a label value of the workload indicator at the target time; and

the method further includes:

performing, by using the first convolutional network, graph convolutional processing on an initial representation of each service in a similarity graph corresponding to a workload indicator, and performing, by using the second convolutional network, time convolutional processing on a result of graph convolutional processing, to obtain a contrastive pattern representation corresponding to each service;
calculating a first similarity score between an aggregation pattern representation corresponding to a same service and a contrastive pattern representation, calculating a second similarity score between aggregation pattern representations corresponding to different services and the contrastive pattern representation, and determining a first prediction loss according to the first similarity score and the second similarity score, where the first prediction loss is positively correlated with the second similarity score and negatively correlated with the first similarity score; and
adjusting at least a part of parameters of a prediction model with a training objective of minimizing a total prediction loss, where the total prediction loss includes the first prediction loss and a second prediction loss determined according to the label value, and the prediction model includes the attention network, the first convolutional network, the linear neural network, and the second convolutional network.

In this example, a cross-view contrastive learning mechanism is used to filter system status information related to workload prediction, and by contrasting representations generated from two views, it is determined which system statuses are related to workload prediction. Specifically, two representations are generated: One is to obtain a contrastive pattern representation based only on a load indicator sequence, and the other is to obtain an aggregation pattern representation by adding system status information. By contrasting similarity between the two representations, a system status associated with workload prediction can be selected through filtration. By using the cross-view contrastive learning mechanism, the model's focus on the system status can be increased, thereby improving accuracy of workload prediction. By selecting system status information related to workload prediction through filtration, future workload can be predicted more accurately, and this process can be referred to as cross-view contrastive learning.

Further, the second prediction loss is determined in the following manner:
determining the second prediction loss according to a difference between a first prediction value and a label value corresponding to each service.

In this example, the first prediction value is a prediction value in an actual application after model training. By determining the second prediction loss, the difference between the first prediction value and the label value can be reduced.

Further, the total prediction loss further includes a third prediction loss; and

the third prediction loss is determined in the following manner:
obtaining, based on the contrastive pattern representation corresponding to each service, a second prediction value of the workload indicator corresponding to each service at the target moment; and determining the third prediction loss according to a difference between the second prediction value and the label value corresponding to each service.

In this example, the second prediction value is a prediction value obtained only based on a load indicator sequence. By determining the third prediction loss, the difference between the second prediction value and the label value can be reduced.

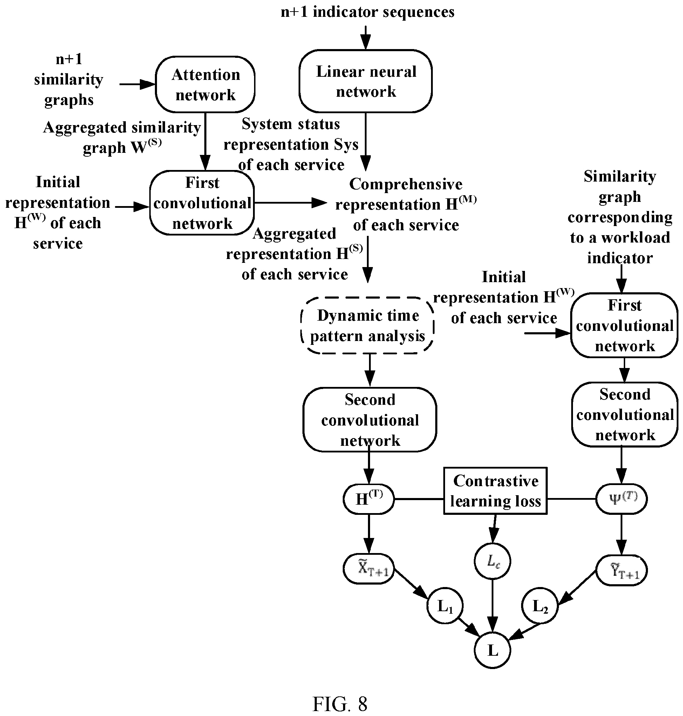

FIG. 8 is a schematic diagram illustrating a model training manner, according to an embodiment. Referring to FIG. 8, a prediction model includes an attention network, a first convolutional network, a linear neural network, and a second convolutional network. A cross-view contrastive learning mechanism is used to train the prediction model. Dynamic time pattern analysis in the figure can correspond to the processing process shown in FIG. 7. Because some workload-independent information exists in system status information, the contrastive learning mechanism is used to retain valid information therein. Specific practice is as follows: An initial representation $H^{(W)}$ of a service is used to perform spatio-temporal convolution to generate a contrastive pattern representation $\Psi^{(T)}$ obtained by using only workload information, and an error $L_c$ is formed by using a contrastive learning loss based on two representations: an aggregated pattern representation $H^{(T)}$ and a contrastive pattern representation $\Psi^{(T)}$ of the service. In addition, representations generated based on two views are used to respectively form prediction results $\tilde{X}_{T+1}$ and $\tilde{Y}_{T+1}$ of workload, which are contrasted with a label value to generate errors $L_1$ and $L_2$, where a total error is L, and parameters in a network are updated by means of back propagation of the error, to obtain a trained model.

According to the method provided in the embodiments of this specification, first, n+1 indicator sequences corresponding to services in the service cluster in the same historical time period are obtained, and include n status indicator sequences corresponding to n system status indicators and a load indicator sequence corresponding to a workload indicator. Then, a correlation coefficient of the same indicator between different services is calculated based on the n+1 indicator sequences corresponding to the services, and a similarity graph corresponding to the same indicator is constructed based on the correlation coefficient, so as to obtain n+1 similarity graphs, where a node in the similarity graph represents a service, and a connection edge between nodes corresponds to a correlation coefficient. Then, the n+1 similarity graphs are processed by using an attention mechanism through an attention network to obtain an aggregated similarity graph. Then, graph convolutional processing is performed on an initial representation of each service in the aggregated similarity graph by using a first convolutional network, to obtain an aggregated representation corresponding to each service, where an initial representation of any service is determined based on a load indicator sequence of the service. Finally, based on the aggregated representation corresponding to each service, a first prediction value of a workload indicator corresponding to each service at a target moment after the historical time period is obtained. It can be understood from the above-mentioned description that, in the embodiments of this specification, a similarity in a system status indicator and a workload indicator of a service is comprehensively considered, so as to facilitate more comprehensive capturing of a connection between services. Based on multiple obtained similarity graphs corresponding to different indicators, an aggregated similarity graph is obtained by using an attention mechanism to aggregate a similarity in different indicators of a service. Based on a load indicator sequence of any service, an initial representation of the service is determined. An aggregated representation after the service similarity is captured is obtained by performing graph convolutional processing on the obtained aggregated similarity graph, and workload prediction of each service is performed based on the aggregated representation corresponding to each service, thereby improving accuracy of workload prediction.

In addition, in some of the above-mentioned preferred embodiments, first, a graph neural network is used to model service similarity, a relationship between services can be better understood, similarity between services can be captured, a change trend of workload can be predicted more accurately, and a more pertinent decision basis is provided for resource management. Second, by analyzing a dynamic time pattern by using fast Fourier transform, a periodic component can be extracted from a workload sequence, a periodic change rule of workload can be better understood to predict future workload, resource allocation can be adjusted according to a periodic feature, and system performance and efficiency can be improved. Finally, system status information is filtered through cross-view contrastive learning, so the system status information can be combined with a workload prediction model, and the model's focus on a system status can be improved, impact of the system status on workload can be considered more comprehensively, and accuracy of workload prediction can be improved. By accurately predicting workload, resource management and optimization can be better performed to improve system performance and efficiency.

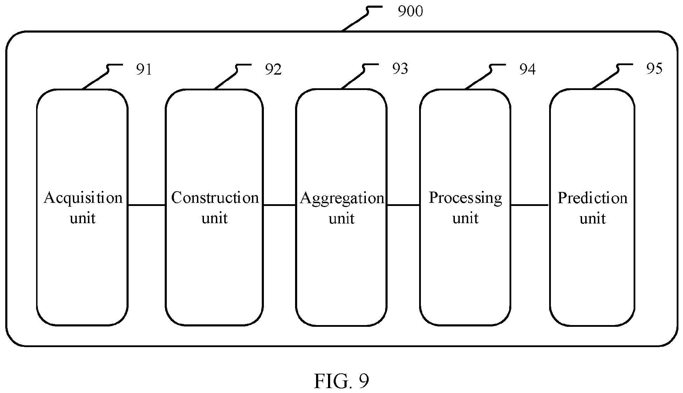

According to an embodiment of another aspect, there is further provided a workload prediction apparatus for a service in a service cluster, and the apparatus is configured to perform the method provided in the embodiments of this specification. FIG. 9 is a schematic block diagram illustrating a workload prediction apparatus for a service in a service cluster, according to an embodiment. As shown in FIG. 9, the apparatus 900 includes:

an acquisition unit 91, configured to obtain n+1 indicator sequences respectively corresponding to services in the service cluster in a same historical time period, which include n status indicator sequences corresponding to n system status indicators and a load indicator sequence corresponding to a workload indicator;

a construction unit 92, configured to: calculate a correlation coefficient of a same indicator between different services based on the n+1 indicator sequences corresponding to the services as obtained by the acquisition unit 91, and construct a similarity graph corresponding to the same indicator based on the correlation coefficient, to obtain n+1 similarity graphs, where a node in the similarity graph represents a service, and a connection edge between nodes corresponds to a correlation coefficient;

an aggregation unit 93, configured to process the n+1 similarity graphs, obtained by the construction unit 92, by using an attention mechanism through an attention network, to obtain an aggregated similarity graph;

a processing unit 94, configured to perform, by using a first convolutional network, graph convolutional processing on an initial representation of each service in the aggregated similarity graph obtained by the aggregation unit 93, to obtain an aggregated representation corresponding to each service, where an initial representation of any service is determined based on a load indicator sequence of the service; and

a prediction unit 95, configured to obtain, based on the aggregated representation corresponding to each service as obtained by the processing unit 94, a first prediction value of a workload indicator corresponding to each service at a target moment after the historical time period.

Optionally, in an embodiment, the n system status indicators include at least one of the following: response time of a service, CPU utilization, and a number of computing resources owned by a service.

Optionally, in an embodiment, the workload indicator includes:

a number of visits or a number of CPU cores used.

Optionally, in an embodiment, the attention network includes multiple attention layers and mapping layers; and the aggregation unit 93 includes:

an attention subunit, configured to: obtain, at any attention layer, a current representation input thereto of each service node in each similarity graph, and perform first processing on the current representation by using an attention mechanism in a same similarity graph, to obtain a first update representation of each service node; perform second processing on the current representation by using an attention mechanism between different similarity graphs, to obtain a second update representation of each service node; and aggregate the first update representation and the second update representation as an output representation of the any attention layer; and

a mapping subunit, configured to: map, at the mapping layer, an output representation, output at a last attention layer and obtained by the attention subunit, of each service node in each similarity graph into a target matrix, to obtain an adjacency matrix of the aggregated similarity graph by using the target matrix.

Further, a current representation, input into and obtained by a first attention layer, of each service node in each similarity graph is a first representation, and the first representation is determined in the following manner:

determining, based on a correlation coefficient between any service node and another service node in a similarity graph corresponding to a workload indicator, a basic node representation corresponding to the service node;

encoding an element in any similarity graph to determine a graph representation corresponding to the similarity graph; and

separately aggregating a basic node representation of any service node and a graph representation corresponding to each similarity graph to obtain a first representation of the service node in each similarity graph.

Further, the first processing includes:

for a first service node in a first similarity graph, determining a first attention score between the first service node and any service node according to a first representation and a current representation of the first service node in the first similarity graph and a first representation and a current representation of the any service node in the first similarity graph; and performing weighted processing on the current representation of the any service node by using the first attention score, to obtain a first update representation of the first service node in the first similarity graph.

Further, the second processing includes:

for a first service node in a first similarity graph, determining, according to a first representation and a current representation of the first service node in the first similarity graph and a first representation and a current representation of the first service node in any similarity graph, that the first service node is corresponding to a second attention score between the first similarity graph and the any similarity graph; and

performing weighted processing on the current representation of the first service node in the any similarity graph by using the second attention score, to obtain a second update representation of the first service node in the first similarity graph.

Further, determining the basic node representation corresponding to the service node includes:

retaining, according to the correlation coefficient in the similarity graph corresponding to the workload indicator, a connection edge whose correlation coefficient is greater than a predetermined threshold in the similarity graph, and deleting other connection edges to obtain an updated similarity graph; and in the updated similarity graph, using a random walk manner to combine correlation coefficients of connection edges any service node passes through, as a basic node representation corresponding to the service node.

Optionally, in an embodiment, the prediction unit 95 includes:

a linear processing subunit, configured to input the n+1 indicator sequences respectively corresponding to the services into a linear neural network, to obtain a system status representation corresponding to each service;
an aggregation subunit, configured to aggregate the system status representation corresponding to each service and obtained by the linear processing subunit with the aggregated representation corresponding to each service, to obtain a comprehensive representation corresponding to each service; and
a prediction subunit, configured to obtain, based on the comprehensive representation corresponding to each service and obtained by the aggregation subunit, the first prediction value of the workload indicator corresponding to each service at the target moment after the historical time period.

Further, the prediction subunit includes:

a frequency domain analysis module, configured to perform frequency domain analysis for the comprehensive representation corresponding to each service, to obtain the first k periodic components respectively corresponding to the services and sorted in order of significance;
a convolutional processing module, configured to: fold the comprehensive representation corresponding to each service and obtained by the frequency domain analysis module according to any periodic component, and perform two-dimensional convolution to obtain a periodic representation corresponding to each service;
an aggregation processing module, configured to aggregate periodic representations respectively corresponding to k periodic components of a same service and obtained by the convolutional processing module to obtain a pattern representation of the service;
a time convolutional module, configured to perform time convolutional processing on a pattern representation corresponding to each service and obtained by the aggregation processing module by using a second convolutional network, to obtain an aggregated pattern representation corresponding to each service; and
a prediction module, configured to obtain, based on the aggregated pattern representation corresponding to each service and obtained by the time convolutional module, the first prediction value of the workload indicator corresponding to each service at the target moment after the historical time period.

Further, each service is a sample service having a label value of the workload indicator at the target time; and

the apparatus further includes:
a contrastive representation unit, configured to: perform, by using the first convolutional network, graph convolutional processing on an initial representation of each service in a similarity graph corresponding to a workload indicator, and perform, by using the second convolutional network, time convolutional processing on a result of graph convolutional processing, to obtain a contrastive pattern representation corresponding to each service;
a loss determining unit, configured to: calculate a first similarity score between an aggregation pattern representation corresponding to a same service and the contrastive pattern representation obtained by the contrastive representation unit, calculate a second similarity score between aggregation pattern representations corresponding to different services and the contrastive pattern representation, and determine a first prediction loss according to the first similarity score and the second similarity score, where the first prediction loss is positively correlated with the second similarity score and negatively correlated with the first similarity score; and
a parameter adjustment unit, configured to adjust at least a part of parameters of a prediction model with a training objective of minimizing a total prediction loss, where the total prediction loss includes the first prediction loss obtained by the loss determining unit and a second prediction loss determined according to the label value, and the prediction model includes the attention network, the first convolutional network, the linear neural network, and the second convolutional network.

Further, the second prediction loss is determined in the following manner:

determining the second prediction loss according to a difference between a first prediction value and a label value corresponding to each service.

Further, the total prediction loss further includes a third prediction loss; and

the third prediction loss is determined in the following manner:

obtaining, based on the contrastive pattern representation corresponding to each service, a second prediction value of the workload indicator corresponding to each service at the target moment; and determining the third prediction loss according to a difference between the second prediction value and the label value corresponding to each service.

According to the apparatus provided in the embodiments of this specification, first, the acquisition unit 91 obtains n+1 indicator sequences corresponding to services in the service cluster in the same historical time period, which include n status indicator sequences corresponding to n system status indicators and a load indicator sequence corresponding to a workload indicator. Then, the construction unit 92 calculates a correlation coefficient of the same indicator between different services based on the n+1 indicator sequences corresponding to the services, and constructs a similarity graph corresponding to the same indicator based on the correlation coefficient, so as to obtain n+1 similarity graphs, where a node in the similarity graph represents a service, and a connection edge between nodes corresponds to a correlation coefficient. Then, the aggregation unit 93 processes the n+1 similarity graphs by using an attention mechanism through an attention network to obtain an aggregated similarity graph. Then, the processing unit 94 performs graph convolutional processing on an initial representation of each service in the aggregated similarity graph by using a first convolutional network, to obtain an aggregated representation corresponding to each service, where an initial representation of any service is determined based on a load indicator sequence of the service. Finally, the prediction unit 95 obtains, based on the aggregated representation corresponding to each service, a first prediction value of a workload indicator corresponding to each service at a target moment after the historical time period. It can be understood from the above-mentioned description that, in the embodiments of this specification, a similarity in a system status indicator and a workload indicator of a service is comprehensively considered, so as to facilitate more comprehensive capturing of a connection between services. Based on multiple obtained similarity graphs corresponding to different indicators, an aggregated similarity graph is obtained by using an attention mechanism to aggregate a similarity in different indicators of a service. Based on a load indicator sequence of any service, an initial representation of the service is determined. An aggregated representation after the service similarity is captured is obtained by performing graph convolutional processing on the obtained aggregated similarity graph, and workload prediction of each service is performed based on the aggregated representation corresponding to each service, thereby improving accuracy of workload prediction.

According to an embodiment of another aspect, a computer-readable storage medium is further provided, where the computer-readable storage medium stores a computer program, and when the computer program is executed in a computer, the computer is enabled to perform the method described with reference to FIG. 2.

According to an implementation of still another aspect, a computing device is further provided, including a memory and a processor. The memory stores executable code, and when executing the executable code, the processor implements the method described with reference to FIG. 2.

A person skilled in the art should be aware that in the above-mentioned one or more examples, functions described in this specification can be implemented by hardware, software, firmware, or any combination thereof. When implemented by using software, these functions can be stored in a computer-readable medium or transmitted as one or more instructions or one or more pieces of code on a computer-readable medium.

The objectives, technical solutions, and beneficial effects of this specification are further described in detail in the above-mentioned specific implementations. It should be understood that the above-mentioned descriptions are merely specific implementations of this specification, but are not intended to limit the protection scope of this specification. Any modification, equivalent replacement, or improvement made based on the technical solutions of this specification shall fall within the protection scope of this specification.

**Claims**

1. A workload prediction method for a service in a service cluster, comprising:

obtaining n+1 indicator sequences respectively corresponding to services in the service cluster in a same historical time period, which comprise n status indicator sequences corresponding to n system status indicators and a load indicator sequence corresponding to a workload indicator;

calculating a correlation coefficient of a same indicator between different services based on the n+1 indicator sequences corresponding to the services, and constructing a similarity graph corresponding to the same indicator based on the correlation coefficient, to obtain n+1 similarity graphs, wherein a node in the similarity graph represents a service, and a connection edge between nodes corresponds to a correlation coefficient;
processing the n+1 similarity graphs by using an attention mechanism through an attention network, to obtain an aggregated similarity graph;
performing, by using a first convolutional network, graph convolutional processing on an initial representation of each service in the aggregated similarity graph, to obtain an aggregated representation corresponding to each service, wherein an initial representation of any service is determined based on a load indicator sequence of the service; and
obtaining, based on the aggregated representation corresponding to each service, a first prediction value of a workload indicator corresponding to each service at a target moment after the historical time period.

2. The method according to claim 1, wherein the n system status indicators comprise at least one of the following:
response time of a service, CPU utilization, and a number of computing resources owned by a service.

3. The method according to claim 1, wherein the workload indicator comprises:
a number of visits or a number of CPU cores used.

4. The method according to claim 1, wherein the attention network comprises multiple attention layers and mapping layers; and processing the n+1 similarity graphs by using the attention mechanism through the attention network, to obtain the aggregated similarity graph comprises:

obtaining, at any attention layer, a current representation input thereto of each service node in each similarity graph, and performing first processing on the current representation by using an attention mechanism in a same similarity graph, to obtain a first update representation of each service node; performing second processing on the current representation by using an attention mechanism between different similarity graphs, to obtain a second update representation of each service node; and aggregating the first update representation and the second update representation as an output representation of the any attention layer; and
mapping, at the mapping layer, an output representation, output at a last attention layer, of each service node in each similarity graph into a target matrix, to obtain an adjacency matrix of the aggregated similarity graph by using the target matrix.

5. The method according to claim 4, wherein a current representation, input into and obtained by a first attention layer, of each service node in each similarity graph is a first representation, and the first representation is determined in the following manner:

determining, based on a correlation coefficient between any service node and another service node in a similarity graph corresponding to a workload indicator, a basic node representation corresponding to the service node;
encoding an element in any similarity graph to determine a graph representation corresponding to the similarity graph; and
separately aggregating a basic node representation of any service node and a graph representation corresponding to each similarity graph to obtain a first representation of the service node in each similarity graph.

6. The method according to claim 5, wherein the first processing comprises:

for a first service node in a first similarity graph, determining a first attention score between the first service node and any service node according to a first representation and a current representation of the first service node in the first similarity graph and a first representation and a current representation of the any service node in the first similarity graph; and
performing weighted processing on the current representation of the any service node by using the first attention score, to obtain a first update representation of the first service node in the first similarity graph.

7. The method according to claim 5, wherein the second processing comprises:

for a first service node in a first similarity graph, determining, according to a first representation and a current representation of the first service node in the first similarity graph and a first representation and a current representation of the first service node in any similarity graph, that the first service node is corresponding to a second attention score between the first similarity graph and the any similarity graph; and
performing weighted processing on the current representation of the first service node in the any similarity graph by using the second attention score, to obtain a second update representation of the first service node in the first similarity graph.

8. The method according to claim 5, wherein determining the basic node representation corresponding to the service node comprises:

retaining, according to the correlation coefficient in the similarity graph corresponding to the workload indicator, a connection edge whose correlation coefficient is greater than a predetermined threshold in the similarity graph, and deleting other connection edges to obtain an updated similarity graph; and

in the updated similarity graph, using a random walk manner to combine correlation coefficients of connection edges any service node passes through, as a basic node representation corresponding to the service node.

9.  The method according to claim 1, wherein obtaining, based on the aggregated representation corresponding to each service, the first prediction value of the workload indicator corresponding to each service at the target moment after the historical time period comprises:

inputting the n+1 indicator sequences respectively corresponding to the services into a linear neural network, to obtain a system status representation corresponding to each service; aggregating the system status representation corresponding to each service with the aggregated representation corresponding to each service, to obtain a comprehensive representation corresponding to each service; and obtaining, based on the comprehensive representation corresponding to each service, the first prediction value of the workload indicator corresponding to each service at the target moment after the historical time period.

10. The method according to claim 9, wherein obtaining, based on the comprehensive representation corresponding to each service, the first prediction value of the workload indicator corresponding to each service at the target moment after the historical time period comprises:

performing frequency domain analysis for the comprehensive representation corresponding to each service, to obtain the first k periodic components respectively corresponding to the services and sorted in order of significance; folding the comprehensive representation corresponding to each service according to any periodic component, and performing two-dimensional convolution to obtain a periodic representation corresponding to each service; aggregating periodic representations respectively corresponding to k periodic components of a same service to obtain a pattern representation of the service; performing time convolutional processing on a pattern representation corresponding to each service by using a second convolutional network, to obtain an aggregated pattern representation corresponding to each service; and obtaining, based on the aggregated pattern representation corresponding to each service, the first prediction value of the workload indicator corresponding to each service at the target moment after the historical time period.

11. The method according to claim 10, wherein each service is a sample service having a label value of the workload indicator at the target time; and the method further comprises:

performing, by using the first convolutional network, graph convolutional processing on an initial representation of each service in a similarity graph corresponding to a workload indicator, and performing, by using the second convolutional network, time convolutional processing on a result of graph convolutional processing, to obtain a contrastive pattern representation corresponding to each service; calculating a first similarity score between an aggregation pattern representation corresponding to a same service and a contrastive pattern representation, calculating a second similarity score between aggregation pattern representations corresponding to different services and the contrastive pattern representation, and determining a first prediction loss according to the first similarity score and the second similarity score, wherein the first prediction loss is positively correlated with the second similarity score and negatively correlated with the first similarity score; and adjusting at least a part of parameters of a prediction model with a training objective of minimizing a total prediction loss, wherein the total prediction loss comprises the first prediction loss and a second prediction loss determined according to the label value, and the prediction model comprises the attention network, the first convolutional network, the linear neural network, and the second convolutional network.

12. The method according to claim 11, wherein the second prediction loss is determined in the following manner:
determining the second prediction loss according to a difference between a first prediction value and a label value corresponding to each service.

13. The method according to claim 12, wherein the total prediction loss further comprises a third prediction loss; and
the third prediction loss is determined in the following manner:

obtaining, based on the contrastive pattern representation corresponding to each service, a second prediction value of the workload indicator corresponding to each service at the target moment; and determining the third prediction loss according to a difference between the second prediction value and the label value corresponding to each service.

14. A computer-readable storage medium that stores a computer program, wherein when executed on a computer, the computer program causes the computer to perform the method according to any one of claims 1 to 13.

15. A computing device, comprising a memory and a processor, wherein the memory stores executable code, and when executing the executable code, the processor implements the method according to any one of claims 1 to 13.

RT

U

O

X$^{(W)}$

FIG. 1

```
                                                              ┌─ 21
┌─────────────────────────────────────────────────────────┐
│   Obtain n+1 indicator sequences respectively corresponding to │
│   services in a service cluster in a same historical time period, │
│   which include n status indicator sequences corresponding to n │
│   system status indicators and a load indicator sequence │
│   corresponding to a workload indicator │
└─────────────────────────────────────────────────────────┘
                              │
                              ▼                               ┌─ 22
┌─────────────────────────────────────────────────────────┐
│   Calculate a correlation coefficient of a same indicator between │
│   different services based on the n+1 indicator sequences │
│   corresponding to the services, and construct a similarity graph │
│   corresponding to the same indicator based on the correlation │
│   coefficient, to obtain n+1 similarity graphs, where a node in │
│   the similarity graph represents a service, and a connection │
│   edge between nodes corresponds to a correlation coefficient │
└─────────────────────────────────────────────────────────┘
                              │
                              ▼                               ┌─ 23
┌─────────────────────────────────────────────────────────┐
│   Process the n+1 similarity graphs by using an attention │
│   mechanism through an attention network, to obtain an │
│   aggregated similarity graph │
└─────────────────────────────────────────────────────────┘
                              │
                              ▼                               ┌─ 24
┌─────────────────────────────────────────────────────────┐
│   Perform, by using a first convolutional network, graph │
│   convolutional processing on an initial representation of each │
│   service in the aggregated similarity graph, to obtain an │
│   aggregated representation corresponding to each service, │
│   where an initial representation of any service is determined │
│   based on a load indicator sequence of the service │
└─────────────────────────────────────────────────────────┘
                              │
                              ▼                               ┌─ 25
┌─────────────────────────────────────────────────────────┐
│   Obtain, based on the aggregated representation corresponding │
│   to each service, a first prediction value of a workload indicator │
│   corresponding to each service at a target moment after the │
│   historical time period │
└─────────────────────────────────────────────────────────┘
```

FIG. 2

Similarity graph
corresponding to RT

RT of
service 1

Correlation
coefficient

RT of
service 2

FIG. 3

RT

U

O

System status
indicator

Correlation
coefficient > 0.75

$\mathrm{X}^{(\mathrm{W})}$

Workload
indicator

Random walk

$E_{v_i}$

$E_{G_j}$

$E_{v_i, G_j}$

FIG. 4

RT

U

O

**System status
indicator**

$\mathbf{X}^{(W)}$

**Workload
indicator**

$\mathbf{W}^{(S)}$

$\mathbf{H}^{(W)}$

$\mathbf{H}^{(S)}$

**Graph
convolution**

FIG. 5

FIG. 6

FIG. 7

FIG. 8

FIG. 9

Europäisches
Patentamt
European
Patent Office
Office européen
des brevets

# EUROPEAN SEARCH REPORT

**Application Number**

EP 24 21 8028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG ZILIANG WANGZILIANG@CQU EDU CN ET AL: "DeepScaling microservices autoscaling for stable CPU utilization in large scale cloud systems", THE ADJUNCT PUBLICATION OF THE 35TH ANNUAL ACM SYMPOSIUM ON USER INTERFACE SOFTWARE AND TECHNOLOGY, ACMPUB27, NEW YORK, NY, USA, 7 November 2022 (2022-11-07), pages 16-30, XP058952242, DOI: 10.1145/3542929.3563469 ISBN: 978-1-4503-9427-7 * the whole document * | 1-15 | INV. G06F9/50 G06F11/30 G06F11/34 G06N3/045 G06N3/0464 G06N3/08 |
| A | MENG CHUNYANG ET AL: "DeepScaler: Holistic Autoscaling for Microservices Based on Spatiotemporal GNN with Adaptive Graph Learning", 2023 38TH IEEE/ACM INTERNATIONAL CONFERENCE ON AUTOMATED SOFTWARE ENGINEERING (ASE), IEEE, 11 September 2023 (2023-09-11), pages 53-65, XP034462971, DOI: 10.1109/ASE56229.2023.00038 [retrieved on 2023-11-08] * the whole document * | 1-15 | |
| A | WO 2022/167840 A1 (ERICSSON TELEFON AB L M [SE]) 11 August 2022 (2022-08-11) * abstract * * paragraphs [0129] - [0160] * * figures 8-18 * | 1-15 | |
| A | CN 115 378 948 A (ZHONGYUAN INSTITUTE OF ZHEJIANG UNIV; UNIV ZHEJIANG) 22 November 2022 (2022-11-22) * abstract * * claims 1-8 * | 1-15 | |

**TECHNICAL FIELDS SEARCHED (IPC)**

G06F
G06N

The present search report has been drawn up for all claims

| Place of search | Date of completion of the search | Examiner |
|---|---|---|
| The Hague | 6 May 2025 | Renault, Sophie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 8028

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | Publication date | Patent family member(s) | Publication date |
|---|---|---|---|
| WO 2022167840 A1 | 11-08-2022 | NONE | |
| CN 115378948 A | 22-11-2022 | CN 115378948 A | 22-11-2022 |
| | | US 2025030610 A1 | 23-01-2025 |
| | | WO 2024040947 A1 | 29-02-2024 |

EPO FORM P0459

For more details about this annex : see Official Journal of the European Patent Office, No. 12/82